(19) **Europäisches Patentamt**

**European Patent Office**

**Office européen des brevets**

(11) **EP 0 584 856 B1**

(12) **EUROPEAN PATENT SPECIFICATION**

(45) Date of publication and mention
of the grant of the patent:
**16.04.1997 Bulletin 1997/16**

(51) Int Cl.[6]: **G01L 23/24**, G01F 1/72

(21) Application number: **93202317.9**

(22) Date of filing: **05.08.1993**

(54) **Method and apparatus for determining air pressure in an engine**

Verfahren und Vorrichtung zur Bestimmung des Luftdrucks in einem Motor

Procédé et dispositif pour déterminer la pression d'air dans un moteur

(84) Designated Contracting States:
**DE FR IT**

(30) Priority: **28.08.1992 GB 9218323**

(43) Date of publication of application:
**02.03.1994 Bulletin 1994/09**

(73) Proprietors:
• **DELCO ELECTRONICS CORPORATION**
**Kokomo Indiana 46902 (US)**
• **GENERAL MOTORS CORPORATION**
**Detroit Michigan 48202 (US)**

(72) Inventors:
• **Valente, Bruno**
**L-2630 Luxembourg (LU)**
• **Schmitz, Heinz Edmund**
**D-5599 Bremm (DE)**

(74) Representative: **Denton, Michael John et al**
**Patent Section**
**1st Floor**
**Gideon House**
**28 Chapel Street**
**Luton Bedfordshire LU1 2SE (GB)**

(56) References cited:
**EP-A- 0 277 240          WO-A-90/15921**
**US-A- 3 977 239          US-A- 4 412 520**

• **PATENT ABSTRACTS OF JAPAN vol. 9, no. 77 (M-369) (1800) 6 April 1985 & JP-A-59 206 632**
• **ADVANCES IN INSTRUMENTATION, vol. 43, no. 3, 1988, Research Triangle Park, NC, US, pp. 1259-1267; Y. MATSUNAGA et al.: 'New intelligent magnetic flowmeter'**

## Description

The present invention relates to a method of and apparatus for determining air pressure in the manifold of an engine.

Modern engine management systems using the speed density concept generally require an indication of the actual load applied to the engine, which is commonly derived from a measure of the "manifold absolute pressure" (MAP) obtained at a predetermined position in the engine manifold and at a given engine operating point.

The manifold absolute pressure is not constant at any given engine operating point but oscillates within a certain frequency band. In order to obtain a useful measure of the manifold absolute pressure, successive readings are averaged, usually by filtering the signal from a pressure sensor through a hardware filter having a time constant typically higher than 4.5 milliseconds (see for example US-A-4,412,520) . Longer filter time constants normally result in more of a stable "average" reading.

However, during transient conditions, for example under large acceleration or deceleration, slow filtering of this type creates a time lag before the engine management system responds to the change in engine operating conditions. This generally results in the principal control parameters (for example, fuel delivery and setting of spark advance) not being accurate during this time lag, which causes the engine management system to depart from the stoichiometric air:fuel ratio, resulting in higher vehicle emissions and reduced drivability.

A filter having a shorter time constant, for example less than 2 milliseconds, provides the means to respond more rapidly to transient engine operating conditions. However, a faster filter of this type can produce an oscillating average reading under steady engine operating conditions. When this occurs, the principal control parameters used by the engine management system are not as stable as required, causing the engine management system to depart from the stoichiometric air:fuel ratio and thereby to lead to poor drivability and increased engine emissions.

The present invention seeks to provide an improved method and apparatus for determining air pressure in the manifold of an engine.

According to an aspect of the present invention, there is provided a method of determining air pressure in the manifold of an engine as specified in claim 1.

The use of two filtered signals can ensure that an engine management system is provided with a stable manifold absolute air pressure signal, to enable it to keep more closely to the stoichiometric air:fuel ratio.

In an embodiment, it is possible to obtain a measure of the manifold absolute pressure from both signals in constantly varying proportions, thereby ensuring that the best measure of manifold air pressure is always taken and preventing any possible inconsistencies caused by a sudden change from one filtered signal to the other.

Advantageously, when the engine is in a substantially steady state, manifold absolute pressure is determined from first and second proportional values set during a previous transient operating state of the engine. These proportional values will generally be the most appropriate in such a circumstance and the use thereof can ensure stability in the determined manifold absolute pressure.

Throttle position generally gives a very useful indication of whether the engine is in a steady or transient state.

Advantageously, the engine is determined to be in a transient state if the throttle position has changed by more than a predetermined amount. The predetermined amount is preferably chosen to avoid a determination that the engine is in a transient state when the throttle has only moved by an insignificant amount.

Preferably, the engine is determined to be in a substantially steady state if the throttle position has been substantially unchanged for a preset time. The preset time is preferably chosen to be sufficient to allow the engine to stabilise after being in a transient state.

According to further aspects of the present invention, there is provided an apparatus for determining air pressure in the manifold of an engine as specified in claim 8 and a method for determining mass air flow in the manifold of an engine as specified in claim 15.

An embodiment of the present invention is described below, by way of illustration only, with reference to the accompanying drawings, in which:

Figure 1 is a flow chart of an embodiment of the invention;
Figure 2 is a flow chart of a second embodiment of the invention;
Figure 3 is a flow chart of a third embodiment of the invention;
Figure 4 shows graphs comparing throttle position with manifold absolute pressure signals obtained from the method of the embodiment of Figure 2 and from a method using inappropriate filters; and
Figure 5 shows part of the graphs of Figure 4 expanded along the time scale.

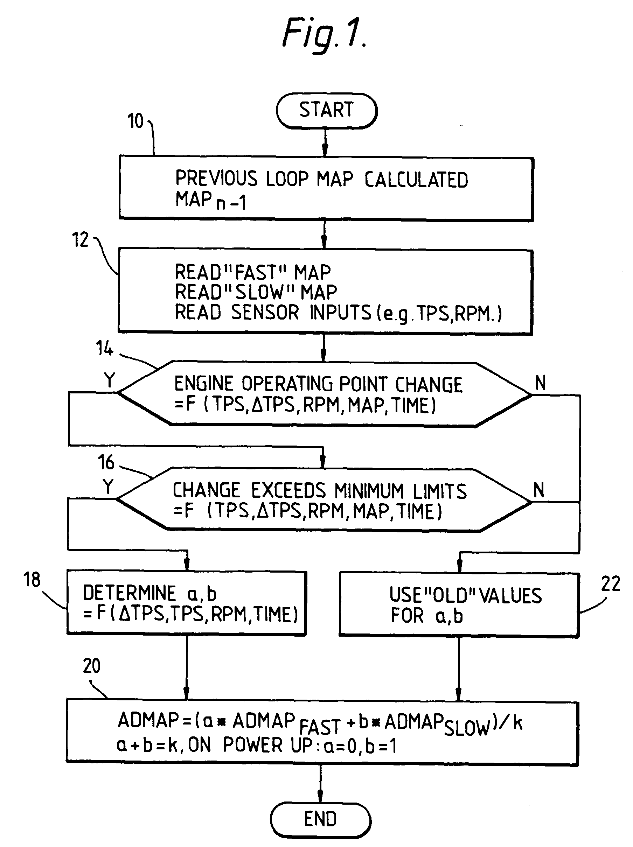

The embodiments described below with reference to Figures 1 to 3 all make use of a manifold absolute pressure (MAP) sensor disposed to measure the pressure at a suitable point inside an engine manifold. The signal from the MAP sensor is fed to two hardware filters, one having a relatively long time constant, for example greater than 4.5 milliseconds, and the other having a relatively short time constant, for example less than 2 milliseconds. The two filtered signals, $MAP_{slow}$ and $MAP_{fast}$ resectively, are passed through respective analogue-to-digital converters to produce digital filtered signals $ADMAP_{slow}$ and $ADMAP_{fast}$, respectively. The digital filtered signals are fed to two inputs of an engine management system for processing.

As will be apparent to the skilled person, the engine management system will be of standard form, being modified in software so as to be able to process the two digital filtered signals. In particular, as will become apparent below, the engine management system is programmed to make use of the best qualities of each hardware filter so as to give an accurate measure of the absolute pressure in the engine manifold during both steady and transient engine operating conditions.

Figure 1 shows an embodiment of routine for implementation in an engine management system. The routine shown in this Figure is of a very general nature, showing the general concept behind this embodiment.

The first step, step 10, in the routine of Figure 1 designates the manifold absolute air pressure determined in a previous pass through the routine as the value $MAP_{n-1}$. This value $MAP_{n-1}$ is used by the engine management system to determine changes in engine load and to control the principal engine operating parameters (for example, fuelling requirements and amount of spark advance) on the basis of any detected change in engine load.

At step 12, the routine reads the digitised filtered signal $ADMAP_{fast}$ from the filter having the short time constant and the digitised filtered signal $ADMAP_{slow}$ from the filter having the long time constant. Additionally, other sensor signals such as throttle position TPS and engine speed RPM are also read at this step.

At step 14, the routine determines whether there has been any change in the engine operating conditions, determined for example as a function of one or more of the throttle position TPS, the change in throttle position $\delta TPS$, the engine speed RPM, the manifold absolute air pressure MAP and time.

If a change in engine operating conditions is detected, the routine passes to step 16 at which it determines whether the detected change exceeds predetermined minimum limits, which are derived as a function of at least one of the throttle position TPS, the change in throttle position $\delta TPS$, the engine speed RPM, the manifold absolute pressure MAP and time. If the predetermined minimum limits have been exceeded, the routine passes to step 18 at which variables a,b used in step 20 are calculated on the basis of at least one of the change in throttle position $\delta TPS$, throttle position TPS, engine speed RPM and time.

On the other hand, if at step 14 it is determined that there has been no change in engine operating conditions or if at step 16 it is determined that the detected change did not exceed the predetermined minimum limits, the routine passes to step 22 at which the values of the variables a,b calculated in a previous pass through the routine are used again in subsequent step 20.

At step 20, use is made of the variables a,b calculated at step 18 or obtained at step 22 to determine the value of the manifold absolute pressure, ADMAP, as a proportion of the digital filtered signals $ADMAP_{fast}$ and $ADMAP_{slow}$ from the two filters, and specifically on the basis of the equation:

$$ADMAP = (a * ADMAP_{fast} + b * ADMAP_{slow})/k,$$

where $k = a+b$. In the case where the variables a,b are chosen always to add up to one, k can be omitted from the above equation.

As will be apparent, by use of the above equation, the determined value of manifold absolute pressure may always be a function of both the fast and slow filter signals. On the other hand, the variables a,b may be chosen such that when a predetermined transient engine condition or a predetermined stable engine condition is detected, the relevant variable a,b is set to zero, so that the value ADMAP becomes a function of the signal from only one of the filters. Preferably, the variables a,b are always the most appropriate for the particular conditions detected to ensure that the engine management system operates close to the stoichiometric ratio during both steady and transient engine operating conditions.

When the vehicle ignition is first switched on, the values a,b are set respectively to zero and one.

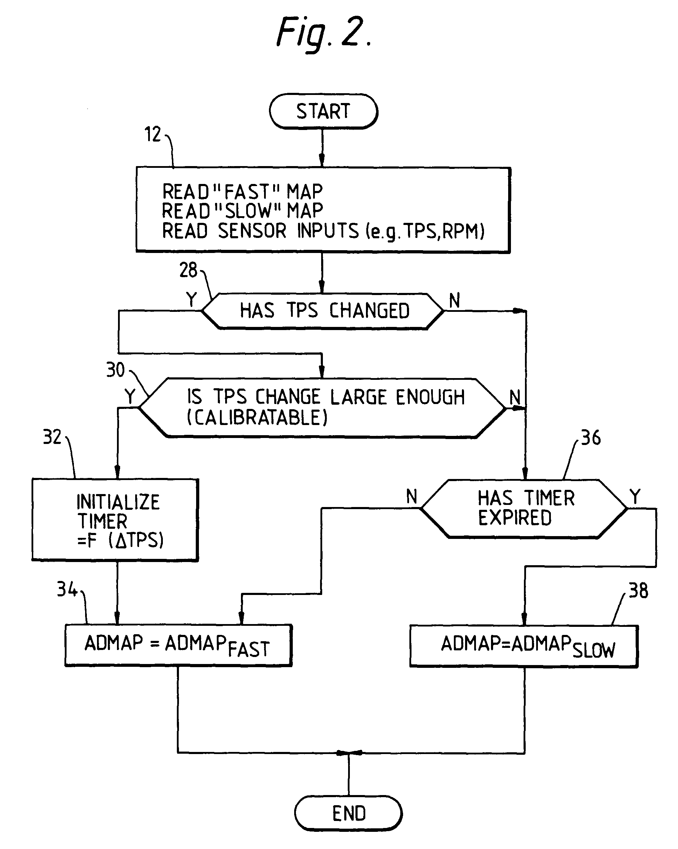

Referring now to Figure 2, step 12 of this second embodiment of routine is the same as the corresponding step in the routine of Figure 1. Step 28 is similar to step 14 of the routine of Figure 1, modified to determine whether there has been a change in the throttle position TPS. If such a change is determined to have occurred, the routine passes to step 30, at which it is determined whether the detected change is large enough to be calibratable for use in step 32.

If at step 30 it is determined that the change in throttle position TPS is large enough to be calibratable, the routine passes to step 32 at which a value for use in initialising a timer is obtained as a function of the change in throttle position $\delta TPS$. The initialisation value is chosen to represent the time taken for the engine to reach a steady state condition.

At step 34, the routine determines the manifold absolute pressure ADMAP on the basis of the signal $ADMAP_{fast}$ from the filter having the short time constant. The routine is then exited.

On the other hand, if no change in throttle position TPS has been detected at step 28, or if at step 30 it is determined that a detected change in throttle position TPS is not large enough, the routine passes to step 36 to determine whether the timer has counted down to zero. If the count of the timer has not reached zero, indicating that the throttle position TPS has only recently become stable, the routine passes to step 34 to determine the manifold absolute pressure ADMAP on the basis of the signal $ADMAP_{fast}$ from the filter having the short time constant.

On the other hand, if at step 36 it is determined that the count of the timer has reached zero, indicating that the engine has reached a stable operating state, the routine passes to step 38 to determine the manifold absolute pressure ADMAP on the basis of the signal $ADMAP_{slow}$ from the filter having the long time constant.

The routine is then exited.

Of course, the features of the routine of Figure 1 which are not included in the routine of Figure 2 could be so included if desired.

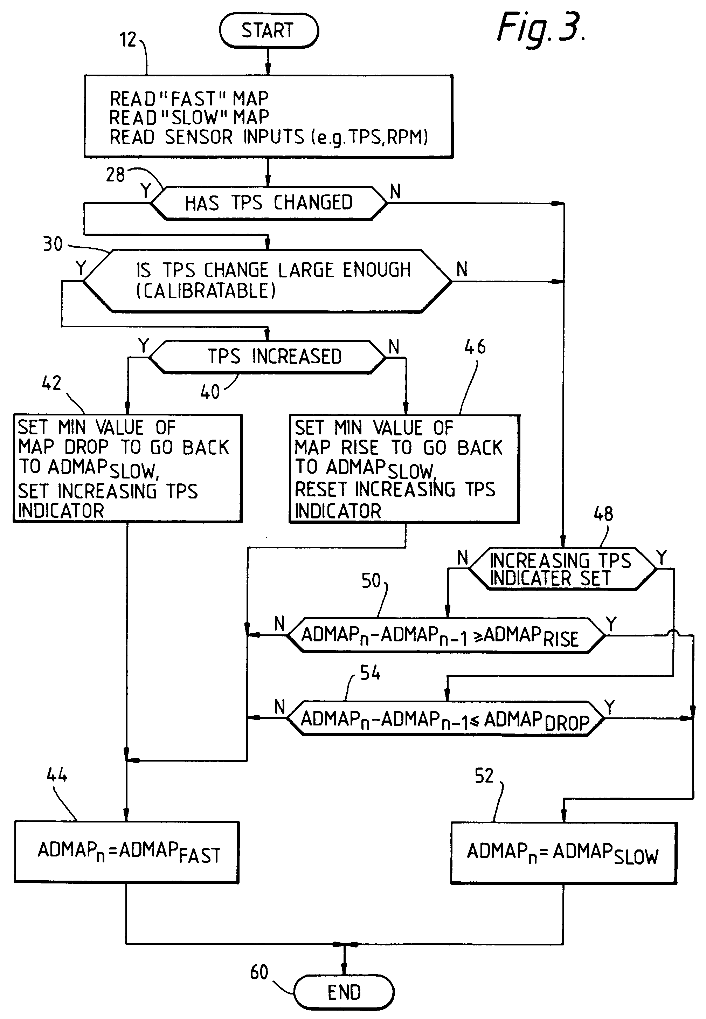

Referring now to Figure 3, a variation to the routine of Figure 2 is shown which can simplify calibration work. This embodiment makes use of the behaviour in the manifold absolute pressure when the throttle stops moving. More specifically, after the throttle comes to a substantial standstill after having moved to a more open position, the manifold absolute pressure drops by a certain amount. Similarly, after the throttle comes to a substantial standstill after moving to a more closed position, the manifold absolute pressure rises by a certain amount. These changes in manifold absolute pressure are indicative of the engine conditions stabilising after acceleration or deceleration. The routine of Figure 3 looks for the drop or rise in manifold absolute pressure to determine that the engine conditions have stabilised and that the system can return to determining the manifold absolute pressure from the filter having the slow time constant.

Steps 12,28 and 30 of the routine of Figure 3 are the same as the corresponding steps of the routine of Figure 2.

At step 40, the routine determines whether the throttle position has increased, that is whether the throttle has moved to a more open position. If this is the case, the routine passes to step 42 to set a minimum manifold absolute pressure drop value $ADMAP_{drop}$ representative of the drop in manifold absolute pressure after stabilisation of the throttle. The minimum drop value $ADMAP_{drop}$ is typically chosen to represent a drop of around 4-5% from the current determined manifold absolute pressure ADMAP.

The routine also sets a TPS increasing indicator (typically, a software flag) at step 42 and then passes to step 44 at which the manifold absolute pressure is determined solely from the signal $ADMAP_{fast}$ from the filter having the short time constant, before exiting at step 60.

If it is determined at step 40 that the throttle position has decreased, that is the throttle has moved to a more closed position, the routine passes to step 46 which is equivalent to step 42, although adjusted for dealing with a decreasing throttle position. In this embodiment, the step 46 sets a minimum manifold absolute pressure rise value $ADMAP_{rise}$ representative of the rise in manifold absolute pressure after stabilisation of the throttle. The minimum rise valve $ADMAP_{rise}$ is typically chosen to represent a rise of around 4-5% from the current determined manifold absolute pressure ADMAP.

The routine also resets the TPS increasing indicator at step 46, to indicate that the throttle position is not increasing, and then passes to step 44 to determine the manifold absolute pressure ADMAP solely from the signal $ADMAP_{fast}$, before exiting at step 60.

When no change in throttle position TPS is detected at step 28 or when at step 30 it is determined that the change is not large enough, the routine passes to step 48 to check whether or not the TPS increasing indicator is set. If the TPS indicator is not set, the routine passes to step 50 to determine if the change in manifold absolute pressure ($ADMAP_n$ - $ADMAP_{n-1}$) is greater than or equal to the minimum rise value $ADMAP_{rise}$ set at step 46 and, if this is so, the routine determines that the rise in manifold pressure after stabilisation of the throttle has been found and passes to step 52 to determine the current manifold absolute pressure $ADMAP_n$ on the basis of the signal $ADMAP_{slow}$ from the filter having the longer time constant. It will be apparent that the term ($ADMAP_n$ - $ADMAP_{n-1}$) will be negative due to dropping manifold absolute pressure.

If the change in determined absolute pressure ($ADMAP_n$ - $ADMAP_{n-1}$) is not greater than or equal to the minimum rise value $ADMAP_{rise}$, implying that the rise in manifold absolute pressure has not yet occurred, the routine returns to step 44 to continue determining the current manifold absolute pressure $ADMAP_n$ from the signal $ADMAP_{fast}$.

If the TPS increasing indicator is set, the routine passes from step 48 to step 54 to determine if the change in manifold absolute pressure ($ADMAP_n$ - $ADMAP_{n-1}$) is less than or equal to the minimum drop value $ADMAP_{drop}$ set at step 42 and, if this is so, determines that the drop in manifold absolute pressure after stabilisation of the throttle has occurred and passes to step 52 to determine the current manifold absolute pressure $ADMAP_n$ from the signal $ADMAP_{slow}$.

On the other hand, if the change in manifold absolute pressure ($ADMAP_n$ - $ADMAP_{n-1}$) is not less than or equal to the minimum drop value $ADMAP_{drop}$, implying that the drop in manifold absolute pressure has not yet occurred, the routine returns to step 44 to continue determining the current manifold absolute pressure $ADMAP_n$ from the signal $ADMAP_{fast}$.

Following either of steps 44 and 52, the routine is exited at step 60.

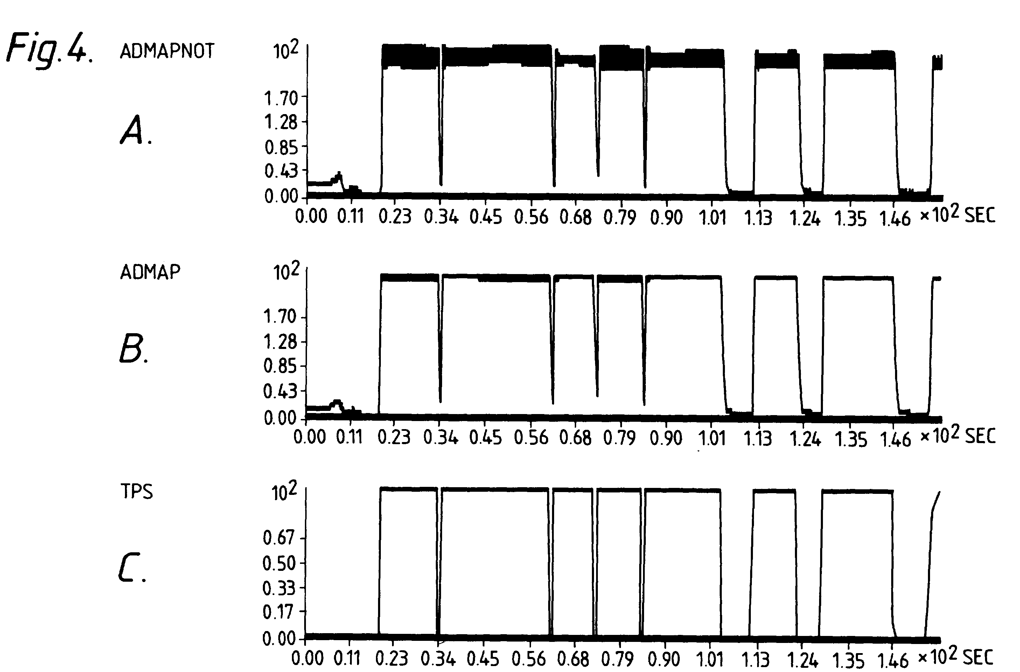

Figure 4 shows a comparison between a manifold absolute pressure signal ADMAP obtained with the routine of Figure 2, a manifold absolute pressure signal obtained with the opposite sensor to the sensor used in the corresponding part of the ADMAP signal and throttle position over a vehicle drive cycle of 146 seconds. The data used for these graphs originates from an early experimental prototype for which no accurate calibration was made of the parameters used to determine the signal ADMAP.

The signal ADMAPNOT shown in graph A is obtained from the filter having the long time constant during periods of transient engine operation and from the signal having the short time constant during periods of stable engine operation. The signal obtained from the routine of Figure 2 is shown in graph B and is designated ADMAP, while the throttle position TPS is shown in graph C.

In this comparison, the throttle position TPS was made to oscillate several times between a fully closed and a fully open position.

The signal ADMAPNOT follows quite closely the throttle position over the transient periods when the throttle position is changing. However, during the periods when the throttle position is steady, the signal ADMAPNOT is unable to remain steady and oscillates within a deadband. This oscillation is sufficient to cause an engine management system to drift from the stoichiometric ratio sufficiently to cause a noticeable increase in emissions and drop in drivability.

On the other hand, the signal ADMAP obtained from the routine of Figure 2, by its selective use of the signals from the most appropriate of the fast and the slow filters, is able to follow closely the throttle position during both the transient and the steady state periods, thereby ensuring that an engine management system can keep more closely to the stoichiometric ratio. The small amount of oscillation shown during the steady state periods in the first half of the vehicle drive cycle can be substantially prevented by accurate calibration of the parameters used in the routine of Figure 2.

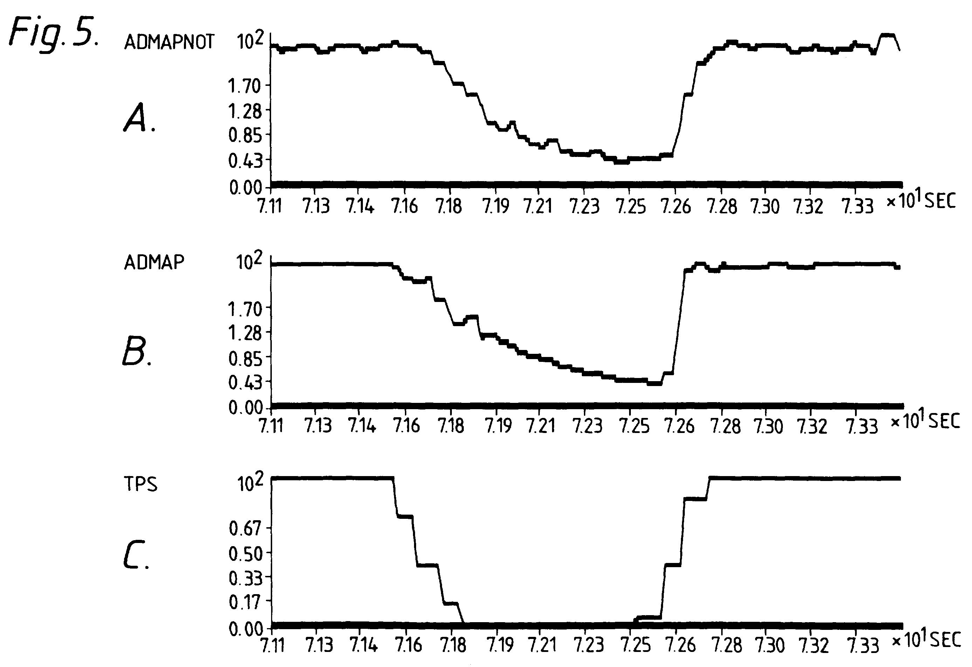

Referring now to Figure 5, the graphs shown are equivalent to the graphs of Figure 4 expanded along the time scale, in which the whole time covered in Figure 5 is around 2.2 seconds to show more clearly the transient response of the system.

The apparent delay of both signals ADMAPNOT and ADMAP to drop once the throttle has moved to a closed position is due to the gradual drop in the air pressure in the manifold. Nevertheless, it can clearly be seen from a comparison of both signals ADMAPNOT and ADMAP with throttle position TPS that the signal ADMAPNOT does not stay stable during periods of stable throttle position and, furthermore, oscillates to a certain extent during periods of changing manifold air pressure. On the other hand, the signal ADMAP is much more stable and follows the actual change in pressure in the manifold more closely, thereby enabling the engine management system to keep more closely to the stoichiometric ratio.

The above-described embodiment may be modified for use in a system which measures mass air flow, the system using an air flow sensor filtered through fast and slow filters and processed by any of the methods described above.

**Claims**

1. A method of determining air pressure in the manifold of an engine comprising the steps of obtaining a sensor signal from a pressure sensor representative of pressure inside the manifold; obtaining first and second filtered signals from the sensor signal, the first filtered signal being obtained from a filter having a relatively short time constant, the second filtered signal being obtained from a filter having a relatively long time constant; determining an engine operating state representative of whether the engine is operating in a substantially steady state or a transient state; and determining the manifold absolute pressure from one of or a combination of the first and second filtered signals in dependence upon the engine operating state.

2. A method according to claim 1, wherein when the engine is in a transient state, the step of determining the manifold absolute pressure includes the steps of determining first and second proportional values, which first and second proportional values are functions of one or more of throttle position, change in throttle position, engine speed and time; and determining the manifold absolute pressure as the sum of a proportion of the first filtered signal and a proportion of the second filtered signal, wherein the proportion of the first filtered signal is derived on the basis of the first proportional value and the proportion of the second filtered signal is derived on the basis of the second proportional value.

3. A method according to claim 2, wherein when the engine is in a substantially steady state, the step of determining the manifold absolute pressure uses first and second proportional values set during a previous transient operating state of the engine.

4. A method according to claim 1, 2 or 3, wherein the step of determining the engine operating state comprises the steps of determining whether there has been a change in throttle position over a predetermined time period; and determining that the engine is in a substantially steady state if there has been substantially no change in throttle position, and in a transient state if there has been a change in throttle position.

5. A method according to claim 4, wherein the engine is determined to be in a transient state if the throttle position has changed by more than a predetermined amount.

6. A method according to claim 4 or 5, wherein the engine is determined to be in a substantially steady state if the throttle position has been substantially unchanged for a preset time.

7. A method according to claim 4 or 5, comprising, after the detection of a change in the throttle position, determining whether the throttle position has remained substantially unchanged for a predetermined period; setting a predetermined manifold absolute pressure drop value if the detected change in throttle position was to a more open throttle position; setting a predetermined manifold absolute rise value if the detected change in throttle position was to a more closed throttle position; and determining that the engine is in a substantially steady state when the manifold absolute pressure changes by the or more than the set drop value or rise value.

8. Apparatus for determining air pressure in the manifold of an engine comprising a pressure sensor disposed so as to produce a sensor signal representative of pressure inside the manifold; first and second filters adapted to produce first and second filtered signals respectively from the sensor signal, the first filter having a relatively short time constant, the second filter having a relatively long time constant; engine sensing means for determining whether the engine is in a substantially steady state or a transient state; and processing means for determining the manifold absolute pressure from one of or a combination of the first and second filtered signals in dependence upon the sensed engine operating state.

9. Apparatus according to claim 8, wherein the processing means is adapted, when the engine is in a transient state, to derive first and second proportional values on the basis of one or more of throttle position, change in throttle position, engine speed and time; and to determine the manifold absolute pressure as the sum of a proportion of the first filtered signal and a proportion of the second filtered signal, wherein the proportion of the first filtered signal is derived on the basis of the first proportional value and the proportion of the second filtered signal is derived on the basis of the second proportional value.

10. Apparatus according to claim 9, wherein when the engine is in a substantially steady state, the processing means is adapted to determine the manifold absolute pressure on the basis of first and second proportional values set during a previous transient state of the engine.

11. Apparatus according to claim 8, 9 or 10, wherein the processing means is adapted to determine whether there has been a change in throttle position over a predetermined time period; and to determine that the engine is in a substantially steady state if there has been substantially no change in throttle position, and in a transient state if there has been a change in throttle position.

12. Apparatus according to claim 11, wherein the processing means is adapted to determine that the engine is in a transient state if the throttle position has changed by more than a predetermined amount.

13. Apparatus according to claim 11 or 12, wherein the processing means is adapted to determine that the engine is in a substantially steady state if the throttle position has been substantially unchanged for a preset time.

14. Apparatus according to claim 12 or 13, wherein after the detection of a change in the throttle position, the processing means is adapted to determine whether the throttle position has remained substantially unchanged for a predetermined period, to set a predetermined manifold absolute pressure drop value if the detected change in throttle position was to a more open throttle position, to set a predetermined manifold absolute rise value if the detected change in throttle position was to a more closed throttle position; and to determine that the engine is in a substantially steady state when the manifold absolute pressure changes by the or more than the set drop value or rise value.

15. A method of determining mass air flow in the manifold of an engine comprising the steps of obtaining a sensor signal from an air flow sensor representative of mass air flow inside the manifold; obtaining first and second filtered signals from the sensor signal, the first filtered signal being obtained from a filter having a relatively short time constant, the second filtered signal being obtained from a filter having a relatively long time constant; determining an engine operating state representative of whether the engine is operating in a substantially steady state or a transient state; determining on the basis of the engine operating state first and second proportional values associated respectively with the first and second filtered signals; and determining the mass air flow on the basis of a proportion of the first filtered signal derived from the first filtered signal and the first proportional value and a proportion of the second filtered signal derived from the second filtered signal and the second proportional value.

**Patentansprüche**

1. Ein Verfahren zum Bestimmen des Luftdrucks in der Verteilerleitung eines Motors mit den Schritten, daß ein Sensorsignal von einem Drucksensor erhalten wird, das den Druck innerhalb der Verteilerleitung darstellt, daß erste und zweite gefilterte Signale aus dem Sensorsignal erhalten werden, wobei das erste gefilterte Signal von einem Filter mit einer relativ kurzen Zeitkonstante erhalten wird, und das zweite gefilterte Signal von einem Filter mit einer relativ langen Zeitkonstante erhalten wird, daß ein Motorarbeitszustand bestimmt wird, der darstellt, ob der Motor in einem im wesentlichen stetigen Zustand oder in einem transienten Zustand arbeitet, und daß der Verteilerleitungsabsolutdruck aus einem oder einer Kombination von den ersten und zweiten gefilterten Signalen in Abhängigkeit von dem Motorarbeitszustand bestimmt wird.

2. Ein Verfahren nach Anspruch 1, worin, wenn der Motor in einem transienten Zustand ist, der Schritt des Bestimmens des Verteilerleitungsabsolutdrucks die Schritte umfaßt, daß erste und zweite proportionale Werte bestimmt werden, welche ersten und zweiten proportionalen Werte Funktionen von einem oder mehreren von Drosselposition, Änderung der Drosselposition, Motorgeschwindigkeit und Zeit sind, und daß der Verteilerleitungsabsolutdruck als die Summe einer Proportion des ersten gefilterten Signals und einer Proportion des zweiten gefilterten Signals bestimmt wird, worin die Proportion des ersten gefilterten Signals auf der Basis des ersten proportionalen Wertes abgeleitet wird, und die Proportion des zweiten gefilterten Signals auf der Basis des zweiten proportionalen Wertes abgeleitet wird.

3. Ein Verfahren nach Anspruch 2, worin, wenn der Motor in einem im wesentlichen stetigen Zustand ist, der Schritt des Bestimmens des Verteilerleitungsabsolutdrucks erste und zweite proportionale Werte verwendet, die während eines vorhergehenden transienten Arbeitszustands des Motors eingestellt werden.

4. Ein Verfahren nach Anspruch 1, 2 oder 3, worin der Schritt des Bestimmens des Motorarbeitszustands die Schritte umfaßt, daß bestimmt wird, ob es eine Änderung der Drosselposition über eine vorbestimmte Zeitperiode gegeben hat, und daß bestimmt wird, daß der Motor in einem im wesentlichen stetigen Zustand, wenn es im wesentlichen keine Änderung der Drosselposition gegeben hat, und in einem transienten Zustand ist, wenn es eine Änderung der Drosselposition gegeben hat.

5. Ein Verfahren nach Anspruch 4, worin bestimmt wird, daß der Motor in einem transienten Zustand ist, wenn die Drosselposition sich um mehr als vorbestimmte Größe geändert hat.

6. Ein Verfahren nach Anspruch 4 oder 5, worin bestimmt wird, daß der Motor in einem im wesentlichen stetigen Zustand ist, wenn die Drosselposition für eine voreingestellte Zeit im wesentlichen unverändert gewesen ist.

7. Ein Verfahren nach Anspruch 4 oder 5, welches umfaßt, daß nach der Detektion einer Änderung der Drosselposition bestimmt wird, ob die Drosselposition für eine vorbestimmte Periode im wesentlichen unverändert geblieben ist, daß ein vorbestimmter Verteilerleitungsabsolutdruckabfallwert eingestellt wird, wenn die detektierte Änderung der Drosselposition in Richtung einer weiter offenen Drosselposition erfolgte, daß ein vorbestimmter Verteilerleitungsabsolutanstiegswert eingestellt wird, wenn die detektierte Änderung der Drosselposition in Richtung einer weiter geschlossenen Drosselposition erfolgte, und daß bestimmt wird, daß der Motor in einem im wesentlichen stetigen Zustand ist, wenn der Verteilerleitungsabsolutdruck sich um den oder mehr als den eingestellten Abfallwert oder Anstiegswert ändert.

8. Vorrichtung zum Bestimmen des Luftdrucks in der Verteilerleitung eines Motors, mit einem Drucksensor, der angeordnet ist, um ein Sensorsignal zu erzeugen, daß den Druck innerhalb der Verteilerleitung darstellt, ersten und zweiten Filtern, die angepaßt sind, jeweils erste bzw. zweite gefilterte Signale aus dem Sensorsignal zu erzeugen, wobei das erste Filter eine relativ kurze Zeitkonstante und das zweite Filter eine relativ lange Zeitkonstante aufweist, Motorwahrnehmungsmitteln zum Bestimmen, ob der Motor in einem im wesentlichen stetigen Zustand oder in einem transienten Zustand ist, und Verarbeitungsmitteln zum Bestimmen des Verteilerleitungsabsolutdrucks aus einem oder einer Kombination von den ersten und zweiten gefilterten Signalen in Abhängigkeit von dem wahrgenommenen Motorarbeitszustand.

9. Vorrichtung nach Anspruch 8, worin das Verarbeitungsmittel angepaßt ist, wenn der Motor in einem transienten Zustand ist, erste und zweite proportionale Werte auf der Basis von einem oder mehreren von Drosselposition, Änderung der Drosselposition, Motorgeschwindigkeit und Zeit abzuleiten, und den Verteilerleitungsabsolutdruck als die Summe einer Proportion des ersten gefilterten Signals und einer Proportion des zweiten gefilterten Signals zu bestimmen, worin die Proportion des ersten gefilterten Signals auf der Basis des ersten proportionalen Wertes abgeleitet wird, und die Proportion des zweiten gefilterten Signals auf der Basis des zweiten proportionalen Wertes abgeleitet wird.

10. Vorrichtung nach Anspruch 9, worin, wenn der Motor in einem im wesentlichen stetigen Zustand ist, das Verarbeitungsmittel angepaßt ist, den Verteilerleitungsabsolutdruck auf der Basis von ersten und zweiten proportionalen Werten zu bestimmen, die während eines vorhergehenden transienten Zustands des Motors eingestellt werden.

11. Vorrichtung nach Anspruch 8, 9 oder 10, worin das Verarbeitungsmittel angepaßt ist, zu bestimmen, ob es eine Änderung der Drosselposition über eine vorbestimmte Zeitperiode gegeben hat, und zu bestimmen, daß der Motor in einem im wesentlichen stetigen Zustand, wenn es im wesentlichen keine Änderung der Drosselposition gegeben hat, und in einem transienten Zustand ist, wenn es eine Änderung der Drosselposition gegeben hat.

12. Vorrichtung nach Anspruch 11, worin das Verarbeitungsmittel angepaßt ist, zu bestimmen, daß der Motor in einem transienten Zustand ist, wenn die Drosselposition sich um mehr als eine vorbestimmte Größe geändert hat.

13. Vorrichtung nach Anspruch 11 oder 12, worin das Verarbeitungsmittel angepaßt ist, zu bestimmen, daß der Motor in einem im wesentlichen stetigen Zustand ist, wenn die Drosselposition für eine voreingestellte Zeit im wesentlichen unverändert gewesen ist.

14. Vorrichtung nach Anspruch 12 oder 13, worin nach der Detektion einer Änderung der Drosselposition das Verarbeitungsmittel angepaßt ist, zu bestimmen, ob die Drosselposition für eine vorbestimmte Periode im wesentlichen unverändert geblieben ist, um einen vorbestimmten Verteilerleitungsabsolutdruckabfallwert einzustellen, wenn die detektierte Änderung der Drosselposition in Richtung einer weiter offenen Drosselpostion erfolgte, um einen vorbestimmten Verteilerleitungsabsolutanstiegswert einzustellen, wenn die detektierte Änderung der Drosselposition in Richtung einer weiter geschlossenen Drosselposition erfolgte, und um zu bestimmen, daß der Motor in einem im wesentlichen stetigen Zustand ist, wenn der Verteilerleitungsabsolutdruck sich um den oder mehr als den eingestellten Abfallwert oder Anstiegswert ändert.

15. Ein Verfahren zum Bestimmen des Massenluftstromes in der Verteilerleitung eines Motors mit den Schritten, daß ein Sensorsignal von einem Luftstromsensor erhalten wird, daß den Massenluftstrom innerhalb der Verteilerleitung darstellt, daß erste und zweite gefilterte Signale aus dem Sensorsignal erhalten werden, wobei das erste gefilterte Signal von einem Filter mit einer relativ kurzen Zeitkonstante erhalten wird, und das zweite gefilterte Signal von einem Filter mit einer relativ langen Zeitkonstante erhalten wird, daß ein Motorarbeitszustand bestimmt wird, der darstellt, ob der Motor in einem im wesentlichen stetigen Zustand oder einem transienten Zustand arbeitet, daß auf der Basis des Motorarbeitszustands erste und zweite proportionale Werte bestimmt werden, die jeweils den ersten und zweiten gefilterten Signalen zugeordnet sind, und daß der Massenluftstrom auf der Basis einer Proportion des ersten gefilterten Signals, das aus dem ersten gefilterten Signal und dem ersten proportionalen Wert abgeleitet wird, und einer Proportion des zweiten gefilterten Signals, das aus dem zweiten gefilterten Signal und dem zweiten proportionalen Wert abgeleitet wird, bestimmt wird.

## Revendications

1. Procédé pour déterminer une pression d'air dans le collecteur d'un moteur, comprenant les étapes consistant à obtenir un signal de capteur d'un capteur de pression représentant une pression à l'intérieur du collecteur ; obtenir des premier et deuxième signaux filtrés du signal de capteur, le premier signal filtré étant obtenu d'un filtre ayant une constante de temps relativement courte, le deuxième signal filtré étant obtenu d'un filtre ayant une constante de temps relativement longue ; déterminer un état de fonctionnement de moteur indiquant si le moteur fonctionne dans un état pratiquement stable ou un état transitoire ; et déterminer la pression absolue au collecteur à partir de l'un ou d'une combinaison des premier et deuxième signaux filtrés en fonction de l'état de fonctionnement du moteur.

2. Procédé selon la revendication 1, dans lequel, quand le moteur est dans un état transitoire, l'étape de détermination de la pression absolue au collecteur comprend les étapes consistant à déterminer des première et deuxième valeurs proportionnelles, lesquelles première et deuxième valeurs proportionnelles sont des fonctions de l'un ou de plusieurs parmi une position du papillon des gaz, une variation de position du papillon des gaz, une vitesse de moteur et le temps ; et déterminer la pression absolue au collecteur comme la somme d'une proportion du premier signal filtré et d'une proportion du deuxième signal filtré, dans laquelle la proportion du premier signal filtré est obtenue sur la base de la première valeur proportionnelle, et la proportion du deuxième signal filtré est obtenue sur la base de la deuxième valeur proportionnelle.

3. Procédé selon la revendication 2, dans lequel, quand le moteur est dans un état pratiquement stable, l'étape de détermination de la pression absolue au collecteur utilise les première et deuxième valeurs proportionnelles déterminées pendant un état précédent de fonctionnement transitoire du moteur.

4. Procédé selon la revendication 1, 2 ou 3, dans lequel l'étape de détermination de l'état de fonctionnement du moteur comprend les étapes consistant à déterminer s'il s'est produit une variation de position du papillon des gaz pendant une période prédéterminée de temps ; et déterminer que le moteur est dans un état sensiblement stable s'il n'y a eu pratiquement aucune variation de position du papillon des gaz, et dans un état transitoire s'il y a eu une variation de position du papillon des gaz.

5. Procédé selon la revendication 4, dans lequel on détermine que le moteur est dans un état transitoire si la position du papillon des gaz a varié de plus qu'une valeur prédéterminée.

6. Procédé selon la revendication 4 ou 5, dans lequel on détermine que le moteur est dans un état pratiquement stable si la position du papillon des gaz est restée pratiquement inchangée pendant une durée prédéterminée.

7. Procédé selon la revendication 4 ou 5, consistant, après la détection d'une variation de la position du papillon des gaz, à déterminer si la position du papillon des gaz est restée pratiquement inchangée pendant une durée prédéterminée ; fixer une valeur prédéterminée de baisse de pression absolue au collecteur si la variation détectée de position du papillon des gaz s'est effectuée vers une position plus ouverte du papillon des gaz ; fixer une valeur prédéterminée d'augmentation de pression absolue au collecteur si la variation détectée de position du papillon des gaz s'est effectuée vers une position plus fermée du papillon des gaz ; et déterminer que le moteur est dans un état sensiblement stable quand la pression absolue au collecteur varie d'une valeur égale ou supérieure à la valeur de baisse ou la valeur d'augmentation fixées.

8. Appareil pour déterminer une pression d'air dans le collecteur d'un moteur, comprenant un capteur de pression disposé de manière à produire un signal de capteur représentant une pression à l'intérieur du collecteur ; des premier et deuxième filtres conçus pour produire respectivement des premier et deuxième signaux filtrés à partir du signal de capteur, le premier filtre ayant une constante de temps relativement courte, le deuxième filtre ayant une constante de temps relativement longue ; des moyens de détection de moteur pour déterminer si le moteur fonctionne dans un état pratiquement stable ou un état transitoire ; et des moyens de traitement pour déterminer la pression absolue au collecteur à partir de l'un ou d'une combinaison des premier et deuxième signaux filtrés en fonction de l'état de fonctionnement détecté du moteur.

9. Appareil selon la revendication 8, dans lequel les moyens de traitement sont conçus, quand le moteur est dans un état transitoire, pour extraire une première et une deuxième valeurs proportionnelles sur la base d'un ou plusieurs parmi la position du papillon des gaz, la variation de position du papillon des gaz, la vitesse du moteur et le temps ; et pour déterminer la pression absolue au collecteur comme la somme d'une proportion du premier signal filtré et d'une proportion du deuxième signal filtré, dans laquelle la proportion du premier signal filtré est obtenue sur la base de la première valeur proportionnelle, et la proportion du deuxième signal filtré est obtenue sur la base de la deuxième valeur proportionnelle.

10. Appareil selon la revendication 9, dans lequel, quand le moteur est dans un état sensiblement stable, les moyens de traitement sont conçus pour déterminer la pression absolue au collecteur sur la base des première et deuxième valeurs proportionnelles fixées pendant un état transitoire précédent du moteur.

11. Appareil selon la revendication 8, 9 ou 10, dans lequel les moyens de traitement sont conçus pour déterminer s'il s'est produit une variation de position du papillon des gaz pendant une période prédéterminée de temps ; et pour déterminer que le moteur est dans un état sensiblement stable s'il n'y a eu pratiquement aucune variation de position du papillon des gaz, et dans un état transitoire s'il s'est produit une variation de position du papillon des gaz.

12. Appareil selon la revendication 11, dans lequel les moyens de traitement sont conçus pour déterminer que le moteur est dans un état transitoire si la position du papillon des gaz a varié de plus qu'une valeur prédéterminée.

13. Appareil selon la revendication 11 ou 12, dans lequel les moyens de traitement sont conçus pour déterminer que le moteur est dans un état pratiquement stable si la position du papillon des gaz est restée pratiquement inchangée pendant une durée prédéterminée.

14. Appareil selon la revendication 12 ou 13, dans lequel, après la détection d'une variation de position du papillon des gaz, les moyens de traitement sont conçus pour déterminer que la position du papillon des gaz est restée pratiquement inchangée pendant une durée prédéterminée, pour fixer une valeur prédéterminée de baisse de pression absolue au collecteur si la variation détectée de position du papillon des gaz s'est effectuée vers une position plus ouverte de papillon des gaz, pour fixer une valeur prédéterminée d'augmentation de pression absolue au collecteur si la variation détectée de position du papillon des gaz s'est effectuée vers une position plus fermée du papillon des gaz ; et pour déterminer que le moteur est pratiquement dans un état stable quand la pression absolue au collecteur varie d'une quantité égale ou supérieure à la valeur fixée de baisse ou d'augmentation.

15. Procédé pour déterminer un débit massique d'air dans le collecteur d'un moteur comprenant les étapes consistant à obtenir un signal de capteur d'un capteur de débit d'air représentant un débit massique d'air dans le collecteur ; obtenir des premier et deuxième signaux filtrés à partir du signal de capteur, le premier signal filtré étant obtenu d'un filtre ayant une constante de temps relativement courte, le deuxième signal filtré étant obtenu d'un filtre ayant une constante de temps relativement longue ; déterminer un état de fonctionnement du moteur indiquant si le moteur fonctionne dans un état pratiquement stable ou un état transitoire ; déterminer sur la base de l'état de fonctionnement du moteur des première et deuxième valeurs proportionnelles associées respectivement aux premier et deuxième signaux filtrés ; et déterminer le débit massique d'air sur la base d'une proportion du premier signal filtré obtenue à partir du premier signal filtré et de la première valeur proportionnelle, et d'une proportion du deuxième signal filtré obtenue à partir du deuxième signal filtré et de la deuxième valeur proportionnelle.

## Fig.1.

```
                          START

10 ──┐
     │  PREVIOUS LOOP MAP CALCULATED
     │  MAP n-1

12 ──┐
     │  READ "FAST" MAP
     │  READ "SLOW" MAP
     │  READ SENSOR INPUTS (e.g. TPS, RPM.)

14 ──┐
  Y  │  ENGINE OPERATING POINT CHANGE        N
     │  = F (TPS, ΔTPS, RPM, MAP, TIME)

16 ──┐
  Y  │  CHANGE EXCEEDS MINIMUM LIMITS         N
     │  = F (TPS, ΔTPS, RPM, MAP, TIME)

18 ──┐                           22 ──┐
     │  DETERMINE a, b                 │  USE "OLD" VALUES
     │  = F (ΔTPS, TPS, RPM, TIME)     │  FOR a, b

20 ──┐
     │  ADMAP = (a * ADMAP_FAST + b * ADMAP_SLOW) / k
     │  a + b = k, ON POWER UP: a = 0, b = 1

                          END
```

$$ADMAP = (a * ADMAP_{FAST} + b * ADMAP_{SLOW})/k$$
$$a + b = k, \text{ON POWER UP}: a = 0, b = 1$$

# Fig. 2.

```
                          ┌─────────┐
                          │  START  │
                          └─────────┘
                               │
  12 ┌──────────────────────────────────────────────────┐
     │ READ "FAST" MAP                                    │
     │ READ "SLOW" MAP                                    │
     │ READ SENSOR INPUTS (e.g. TPS, RPM)                 │
     └──────────────────────────────────────────────────┘
                               │
  28        Y ╱───────────────────────────────╲ N
            ╱        HAS TPS CHANGED            ╲
            ╲                                   ╱
             ╲─────────────────────────────────╱
                               │
  30      Y ╱──────────────────────────────────╲ N
           ╱   IS TPS CHANGE LARGE ENOUGH        ╲
           ╲   (CALIBRATABLE)                    ╱
            ╲──────────────────────────────────╱
                               │
  32 ┌───────────┐      36  N ╱────────────╲ Y
     │ INITIALIZE│           ╱ HAS TIMER    ╲
     │ TIMER     │           ╲ EXPIRED      ╱
     │ =F (ΔTPS) │            ╲────────────╱
     └───────────┘
  34 ┌───────────────────┐   38 ┌─────────────────────┐
     │ ADMAP = ADMAP_FAST│      │ ADMAP = ADMAP_SLOW  │
     └───────────────────┘      └─────────────────────┘
                               │
                          ┌─────────┐
                          │   END   │
                          └─────────┘
```

# Fig. 3.

**START**

12 — READ "FAST" MAP
READ "SLOW" MAP
READ SENSOR INPUTS (e.g. TPS, RPM)

28 — HAS TPS CHANGED — N

30 — IS TPS CHANGE LARGE ENOUGH (CALIBRATABLE) — N

40 — TPS INCREASED — N

42 — SET MIN VALUE OF MAP DROP TO GO BACK TO $ADMAP_{SLOW}$, SET INCREASING TPS INDICATOR

46 — SET MIN VALUE OF MAP RISE TO GO BACK TO $ADMAP_{SLOW}$, RESET INCREASING TPS INDICATOR

48 — INCREASING TPS INDICATER SET — Y / N

50 — $ADMAP_n - ADMAP_{n-1} \geq ADMAP_{RISE}$ — Y / N

54 — $ADMAP_n - ADMAP_{n-1} \leq ADMAP_{DROP}$ — Y / N

44 — $ADMAP_n = ADMAP_{FAST}$

52 — $ADMAP_n = ADMAP_{SLOW}$

60 — **END**

# Fig.4.

**A.** ADMAPNOT

**B.** ADMAP

**C.** TPS

Fig.5.